# FASCICULE DE BREVET EUROPEEN

(11) **EP 0 621 703 B1**
(45) Date de publication et mention de la délivrance du brevet: **28.02.1996**
(21) Numéro de dépôt: 94400853.1
(22) Date de dépôt: 19.04.1994
(51) Int. Cl.: H04L 7/033

(54) **Procédé de récupération d'horloge et de synchronisation pour la réception d'informations transmises par un réseau ATM et dispositif de mise en oeuvre du procédé**
Verfahren und Vorrichtung zur Taktrückgewinnung und Synchronisierung für den Empfang über ein ATM-Netz übertragener Daten
Method and circuit for clockrecovery and synchronisation for the reception of information transmitted via an ATM network

(30) Priorité: 22.04.1993 FR 9304775
(43) Date de publication de la demande: 26.10.1994
(73) Titulaire: FRANCE TELECOM, F-75015 Paris (FR)
(72) Inventeur: Rainard, Jean-Luc, F-94230 Cachan (FR)
(74) Mandataire: Schmit, Christian Norbert Marie

(56) Documents cités:
- EP-A- 0 071 425
- EP-A- 0 168 330
- GB-A- 2 086 106
- GB-A- 2 171 577

## Description

L'invention concerne un procédé de récupération d'horloge et de synchronisation pour la réception d'informations transmises par rafales par un réseau ATM. Elle concerne également un dispositif de mise en oeuvre du procédé.

On rappelle tout d'abord qu'un réseau ATM (Asynchronous Transfert Mode) permet la transmission d'informations numériques ayant des débits variés, pouvant être importants, ces débits pouvant en effet, aller jusqu'à 622 mégabits par seconde et au-delà.

La transmission en mode ATM se fait par transfert d'informations de longueur constante. La quantité élémentaire d'informations transmises est de 48 octets, le bloc d'information transmis en ATM est dénommé "cellule" et identifié par une étiquette de 5 octets appelée en-tête. La longueur totale d'une cellule est donc de 53 octets.

L'invention s'applique tout particulièrement à la récupération d'horloge et à la synchronisation pour la réception de telles cellules transmises par rafales sur un réseau.

La réception de cellules ATM transmises par rafales (mode BURST) pose des problèmes particuliers de régénération d'horloge et de synchronisation. En effet, selon ce mode de transmission par rafales, les cellules sont déphasées les unes par rapport aux autres et sont séparées par des périodes pendant lesquelles le canal de transmission est au repos. Le rephasage et la resynchronisation doivent donc être effectués systématiquement à la réception de chaque nouvelle cellule. Pour réaliser ces deux opérations, il a été prévu de faire précéder la cellule proprement dite d'une séquence de bits que l'on nomme précurseur. Ce précurseur comporte deux parties traitées indépendamment par les systèmes de réception actuels de manière à obtenir ces deux opérations de récupération d'horloge et de resynchronisation. Les deux parties formant le précurseur sont dénommées : pour l'une préambule et pour l'autre délimiteur.

Le préambule sert uniquement au rephasage de la cellule entrante. Pour cela le système récepteur reçoit un train de données qui est un train binaire aléatoire codé par un codage de type NRZ piloté à l'émission par une horloge HE de fréquence F. Ce signal d'horloge n'est pas transmis avec les données. Cependant, à la réception, on dispose d'une horloge locale HL de fréquence F' égale à F ou très peu différente sans rapport de phase avec l'horloge HE. Il est donc nécessaire à la réception du train de données, de retarder ces données en entrée de façon à les rephaser correctement sur l'horloge locale HL. Le retard à introduire n'est pas le même pour toutes les données car généralement elles proviennent d'émetteurs situés à des distances différentes. Le retard doit donc être recalculé au début de chaque cellule. Pour pouvoir effectuer cette opération rapidement et efficacement le préambule comporte de nombreux fronts et est généralement de la forme 101010 .... 010101.

Cependant, l'action du système de rephasage n'est pas instantanée et le début du préambule présente souvent des erreurs de réception, des bits ayant été omis ou même doublés en sortie du système de rephasage. Compte-tenu de la nature très répétée du préambule, il est impossible de savoir combien de bits ont été perdus et donc à partir de quel bit du préambule la réception commence réellement.

Le préambule permet d'effectuer le rephasage "bit" mais pas le rephasage "octet" (ou resynchronisation).

Cet inconvénient est encore plus accentué en présence d'erreur de transmission dans le préambule.

Le délimiteur, quant-à-lui est prévu pour effectuer l'opération de resynchronisation. C'est un mot binaire connu qui est inséré entre le préambule et la cellule proprement dite et dont la reconnaissance permet de savoir, sans ambiguïté, sur quel bit de train de données démarre le premier octet d'information utile. Malheureusement, en cas d'erreur lors de la transmission du délimiteur, la synchronisation octet ne peut pas être effectuée, la cellule sera perdue.

En cas d'erreur sur la ligne de transmission les difficultés sont encore plus accrues du fait que la taille du précurseur doit être la plus réduite possible pour ne pas dégrader le débit utile du canal.

Ainsi, pour ne pas dégrader le débit utile du canal il est nécessaire que le précurseur soit court, le rephasage doit par conséquent être réalisé très rapidement, ce qui exclut le recours aux techniques analogiques classiquement utilisées en mode continu (filtrage, PLL) pour lesquelles des préambules de plus d'une dizaine de bits sont nécessaires.

La présence éventuelle d'erreurs de transmission parmi les bits servant au rephasage et à la resynchronisation fait par conséquent, courir un risque de perte de cellule, risque d'autant plus grand que cette information est moins redondante du fait de sa brièveté.

Les systèmes existant actuellement afin de réaliser ces opérations de rephasage et de resynchronisation, tel que décrit par exemple dans le document EP-A-168330 concernant un dispositif de recadrage automatique d'horloge, ne tiennent pas compte, en pratique, de la présence éventuelle, d'erreurs de transmission. On peut citer toutefois, la publication (ISH 91) de A. ISHIKURA & al. de la société NTT intitulée "A cell-based multipoint ATM transmission système for a passive double-star access Network" IEEE Workshop on Local Optical Networks Sept91 TOKIO Art.G.3.4. portant sur un système qui permet de corriger une seule erreur, (c'est-à-dire un bit faux), dans le délimiteur. Cependant la solution apportée par ce système ne permet pas de résoudre tous les problèmes rencontrés par le demandeur.

La présente invention a pour but de remédier à ces inconvénients. La présente invention permet en effet, de proposer un procédé de récupération d'horloge et de synchronisation des données extrêmement fiable, même en présence d'erreurs, le procédé consistant pour cela, à ne rephaser les données qu'après avoir attendu plusieurs fronts cohérents avec une impulsion d'horloge locale sur un même signal de phase. Le procédé consiste également pour la synchronisation des données, à réaliser une correction des erreurs apparaissant dans le train binaire précurseur et plus particulièrement, dans le mot de resynchronisation.

L'invention a pour objet un procédé de récupération d'horloge et de synchronisation de données transmises par mode de transmission temporelle asynchrone se trouvant sous la forme de cellules d'informations, précédé d'un train binaire précurseur, principalement caractérisé en ce que, pour assurer ces fonctions même en présence d'erreur de transmission, il consiste à :
- effectuer la réception à partir d'une horloge locale HL, de période T, la fréquence de cette horloge étant sensiblement égale à la fréquence d'émission;
- introduire des retards d'une durée T/k sur le train binaire reçu pour obtenir plusieurs signaux de phase,
- attendre la présence, sur un même signal de phase, de plusieurs fronts cohérents avec une impulsion d'horloge HL,
- choisir comme signal de rephasage des données, le signal de phase satisfaisant à la condition précédente et qui encadre l'impulsion d'horloge,
- rephaser les données avec ce signal de phase,
- reconnaître dans le train binaire précurseur un mot de resynchronisation pour synchroniser la réception des données.

Selon une autre caractéristique du procédé, la resynchronisation se fait avec correction d'erreur de transmission sur le train binaire précurseur et génération d'un créneau de synchronisation pendant une période durant laquelle, le mot de synchronisation dénommé "délimiteur" est susceptible d'apparaître.

Selon une autre caractéristique de l'invention, pour éviter une reconnaissance anticipée et erronée du délimiteur (supposé de longueur D), le créneau de synchronisation Cs n'est émis que si chaque séquence Si de D bits à analyser obtenue en prenant successivement pour point de départ chacun des bits compris entre la montée de Cs et le début effectif du délimiteur diffère du délimiteur par au moins 2N+1 bits, N étant le nombre d'erreurs de transmission pouvant être corrigées.

Selon une autre caractéristique de l'invention, le train binaire précurseur comporte un préambule et un délimiteur qui se recouvrent partiellement.

Selon une autre caractéristique de l'invention, le délimiteur et le préambule se recouvrent entièrement.

L'invention a également pour objet un dispositif de récupération d'horloge et de synchronisation de données transmises en mode de transmission temporelle asynchrone se trouvant sous la forme de cellules d'informations précédées d'un train binaire précurseur, principalement caractérisé en ce qu'il comporte :
a) un circuit de rephasage apte à rephaser les données même en présence d'erreurs de transmission, ce circuit comprenant :
   - une ligne à retard pour introduire des retards de phase sur chaque impulsion du train de données. Chaque retard a une durée T/k où T est la période de l'horloge locale HL;
   - des moyens de détection des fronts cohérents avec les impulsions d'horloge et de corrections d'erreurs apparaissant sur le préambule du train de données précurseur ;
b) un circuit de resynchronisation destiné à reconnaître dans le train précurseur, le délimiteur en présence d'erreurs de transmission dans le délimiteur, ce circuit comportant pour cela des moyens correcteurs d'erreurs sur le délimiteur.

Selon une autre caractéristique de l'invention, les moyens de détection correcteurs d'erreurs du circuit de rephasage comportent autant d'étages de registre à bascule que d'erreurs à corriger, ces registres étant reliés entre eux par des portes logiques de manière à ne stocker la détection d'un front que si un front correspondant à la même phase a déjà été stocké dans le registre de l'étage précédent.

Le circuit de rephasage comporte en outre un registre de front qui ne stocke un front que si ce front a déjà été stocké dans les étages précédents sur la même phase, le premier front arrivant dans le registre de front déterminant le phasage définitif et arrêtant le processus de recherche de phase.

Selon une autre caractéristique, le dispositif comporte en outre des moyens commandant l'arrêt du processus de recherche de phase et de sélection du signal de phase permettant de rephaser les données.

Selon un mode de réalisation, les moyens commandant l'arrêt du processus de recherche de phases comportent une porte logique OU.

Selon une autre caractéristique de l'invention, les moyens de sélection du signal de phase comportent un multiplexeur avec priorité câblée interdisant la propagation simultanée de deux phases et sélectionnant la plus à droite ou la plus à gauche des phases valides.

Selon une autre caractéristique de l'invention le multiplexeur a une structure pipe-line afin d'augmenter sa fréquence de travail.

Selon une autre caractéristique de l'invention, le multiplexeur comporte en entrée, dans le cas où le préambule et le délimiteur se recouvrent, des moyens de mémorisation pour mémoriser les bits communs au préambule et au délimiteur en attendant que le signal de rephasage convenant soit sélectionné.

Les moyens de mémorisation sont réalisés par des registres de mémorisation.

Selon une autre caractéristique de l'invention, le circuit de resynchronisation comporte un registre de reconnaissance série, de longueur égale à celle du délimiteur auquel sont reliés au moyen de portes logiques, N autres registres décalés d'un bit, N étant le nombre d'erreurs que l'on désire corriger dans le délimiteur.

D'autres caractéristiques et avantages de la présente invention apparaîtront à la lecture de la description qui est faite ci-après, à titre illustratif et non démonstratif et en regard des dessins annexés sur lesquels :
la figure 1 représente un dispositif de rephasage et de synchronisation selon l'invention ;
la figure 2 représente des moyens de détection des fronts du circuit de rephasage avec correction de deux erreurs ;
la figure 3 représente les différents types d'erreurs ;
la figure 4 représente le tableau d'état des bascules composant les registres de chaque étage ;
la figure 5 représente un exemple de réalisation de multiplexeur du circuit de rephasage selon un mode de réalisation ;
la figure 6 représente des moyens de synchronisation selon un mode de réalisation pratique ;
la figure 7 représente des moyens de synchronisation selon un deuxième mode de réalisation pratique ;
la figure 8 représente un exemple de réalisation du circuit P ;
la figure 9 représente un diagramme illustrant le phasage dans un cas idéal ;
la figure 10 représente un diagramme illustrant le phasage dans un cas des plus critiques;
la figure 11 représente un diagramme illustrant la resynchronisation selon un mode de fonctionnement ;
la figure 12 représente un schéma de réalisation du circuit de resynchronisation selon une variante du mode de fonctionnement ; et
la figure 13 représente un diagramme illustrant la resynchronisation selon cette variante de fonctionnement.
Les figures 14, 15, 16 et 17 représentent des exemples de mot de synchronisation.

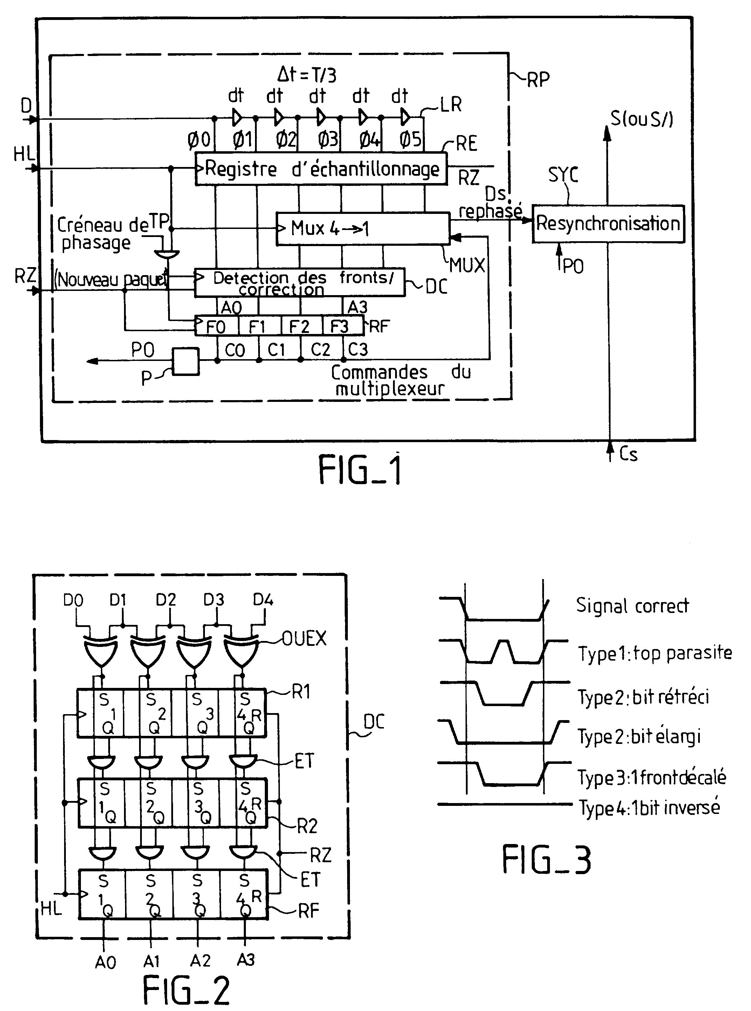

La figure 1 représente un dispositif de déphasage et de resynchronisation selon l'invention. Ce dispositif comporte un circuit de déphasage RP encore dénommé "phaseur". Ce phaseur comporte une ligne à retard LR permettant d'introduire une série de k retards dt de valeur T/k décalant le signal entrant D. Les sorties de ces retards correspondent à la donnée D déphasée de T/k, 2T/k, ..., (k-1)T/k, T. La donnée entrante D correspond au train binaire précurseur. T correspond à la période de l'horloge locale HL.

Dans l'exemple de la figure 1, la ligne à retard est composée de cinq éléments dont le temps de propagation vaut T/3. On obtient ainsi les signaux φ0, φ1, φ2, φ3, φ4 et φ5 correspondant à D retardée de 0, T/3 2T/3, T, T+T/3, T+2T/3. Ces signaux sont capturés dans un registre d'échantillonnage RE sur le front de monté de l'horloge locale HL. Les quatre premiers bits D0 à D3 permettent de connaître l'emplacement des fronts de la donnée D par rapport à ceux de l'horloge HL. Par exemple, si D0 à D3 valent 0111, on en déduit que le front de la donnée D se situe dans le premier tiers de la période de l'horloge HL.

Le phaseur conforme à l'invention comporte en outre des moyens DC de détection des fronts cohérents et de correction d'erreurs.

Ces moyens permettent d'attendre d'avoir observé plusieurs fronts cohérents, c'est-à-dire des fronts apparaissant sur le même signal φᵢ avant de valider le phasage.

Le phaseur comporte également un registre de front RF générant des signaux de commande, un de ces signaux permettant de rephaser la donnée.

Le phaseur comporte en outre un multiplexeur MUX commandé par le signal de commande généré par le registre de front RF et fournissant la donnée rephasée Ds.

Les moyens de détection des fronts et de correction DC sont représentés de façon plus détaillée sur la figure 2. Selon l'exemple de réalisation qui est donné, ces moyens de correction permettent de corriger deux erreurs. On entend par erreur une erreur survenant sur un bit du signal entrant. Lorsque plusieurs bits sont affectés simultanément, on considère qu'il y a plusieurs erreurs.

Les différents types d'erreurs pouvant survenir ont été représentés sur le diagramme que représente la figure 3. Les erreurs de type 1 se manifestent par l'apparition d'un top parasite (positif ou négatif) au milieu d'un bit du signal (une erreur de ce type survenant pendant le préambule du précurseur provoque l'apparition de deux fronts supplémentaires erronés).

Les erreurs de type 2 provoquent le déplacement des deux fronts du bit vers l'intérieur ou vers l'extérieur ; dans ce cas, deux des fronts corrects disparaissent et sont remplacés par deux fronts erronés.

Les erreurs de type 3 déplacent d'un des fronts du bit du préambule : 1 front correct disparaît pour laisser la place à un front incorrect.

Enfin, les erreurs de type 4 provoquent la disparition d'un bit : deux fronts corrects disparaissent sans que ne soit créé aucun front incorrect.

Les erreurs les plus graves correspondent aux erreurs de type 2. Ce sont celles qui diminuent le plus le nombre de fronts corrects tout en augmentant le plus celui des fronts incorrects. Le phaseur conforme à l'invention permet de ne valider le front de phasage que si il a été observé P fois au même emplacement par le registre de front.

Mais les fronts corrects peuvent très bien être à la frontière entre deux positions adjacentes du fait des gigues inévitables lors de la transmission, ils vont alors se distribuer aléatoirement sur deux bits adjacents du registre.

Ainsi, selon l'invention, on choisit un retard élémentaire dt suffisant, les gigues étant elles suffisamment faibles, pour qu'un front correct ne puisse apparaître sur plus de deux bits adjacents. Dans le pire des cas il faut disposer de 2P-1 fronts corrects dans le préambule pour effectuer le phasage (P-1 dans une des bascules et P dans la voisine).

Pour résister à N erreurs de type 2 dans le préambule, si F est le nombre de fronts contenus dans le préambule, les deux conditions suivantes devront être satisfaites :
N inférieur à P, (sinon on pourrait éventuellement se baser sur un front erroné);
F - 2N ≥ à 2P-1 (nécessaire pour qu'il reste suffisamment de fronts corrects pour le phasage).

En prenant P = N+1 on obtient F ≥ 4N+1, condition nécessaire et suffisante pour que le système fonctionne dans les conditions spécifiées.

Dans l'exemple de la présence de deux erreurs, le préambule devra contenir neuf transitions pour obtenir un rephasage. Pour cela on attendra d'avoir observé un front trois fois au même emplacement.

Le schéma du circuit de détection des fronts représenté sur la figure 2 permet d'obtenir ce résultat. Ce circuit comporte pour cela un ensemble de portes logiques OU exclusif OUEX à deux entrées et une sortie et des étages de registre à bascule de type RS, reliés entre eux par des portes de type ET. Le nombre d'étages de registre à bascule RS est choisi en fonction du nombre d'erreurs que l'on veut corriger au moyen de ce circuit.

Sur l'exemple de réalisation qui est montré à partir de cette figure on a utilisé deux registres, le registre R1 et le registre R2, le circuit permettant ainsi de corriger deux erreurs. Les portes ET qui permettent de relier le registre R1 au registre R2 tel que représenté sur cette figure 2, sont des portes à deux entrées et une sortie, la deuxième série de portes ET relie le registre R2 à un registre à bascule dénommé registre de front RF dans la suite.

Les bascules composant les registres R1, R2 et le registre de front RF sont des bascules de type RS et ont le fonctionnement décrit ci-après.

Lorsque le contenu de la bascule vaut 1, seule une remise à zéro appliquée sur l'entrée de remise à zéro asynchrone R de ces bascules peut le remettre à zéro. L'entrée S est synchrone, elle est stockée sur un front montant de l'horloge locale HL.

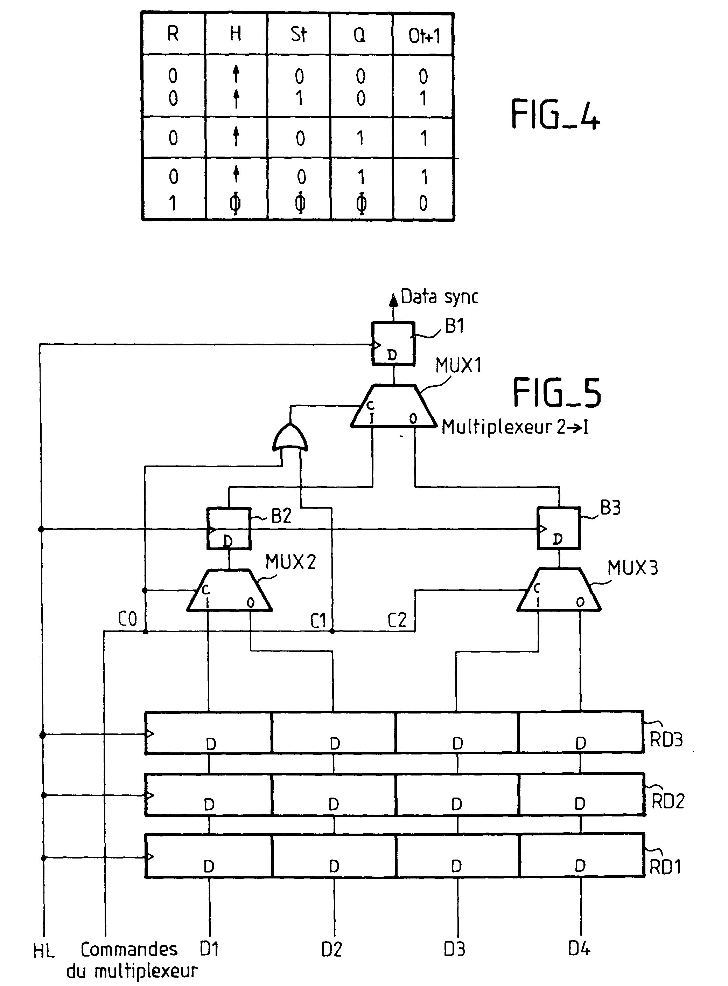

Le tableau représenté sur la figure 4 permet d'illustrer les états des bascules composant les registres R1, R2 et le registre de front RF. Les registres R1, R2 et RF sont remis à zéro avant le début de la cellule par un signal RZ fourni au circuit. Un front du préambule arrivant par exemple entre D1 et D2 est stocké dans la bascule 2 de R1. Un deuxième front arrivant au même endroit dans la période atteindra alors la bascule 2 de R2 et un troisième viendra enfin mettre à 1 la bascule 2 du registre RF. Les fronts situés à d'autres emplacements dans la période sont stockés dans d'autres bascules. Dès que l'une quelconque des bascules du registre de front est atteinte, le phasage est considéré comme terminé.

Ainsi les fronts sont détectés à l'aide des portes OU exclusif et mémorisés dans les deux registres intermédiaires R1 et R2 puis dans le registre de front RF. Un front ne peut être stocké dans le registre R2 que si l'on a déjà stocké un front correspondant à la même phase dans le registre R1. De même, un front ne peut être stocké dans le registre de front RF que si un front homologue a été chargé dans le registre R2. Tout front apparaissant dans RF a donc été vu au moins trois fois sur la même phase, ce qui permet d'éliminer deux fronts erronés quelle que soit leur phase. Le premier front arrivant dans le registre RF détermine le phasage définitif et arrête le processus de recherche de phase par la génération d'un signal PO. Ce signal est généré par le circuit portant la référence P sur cette figure.

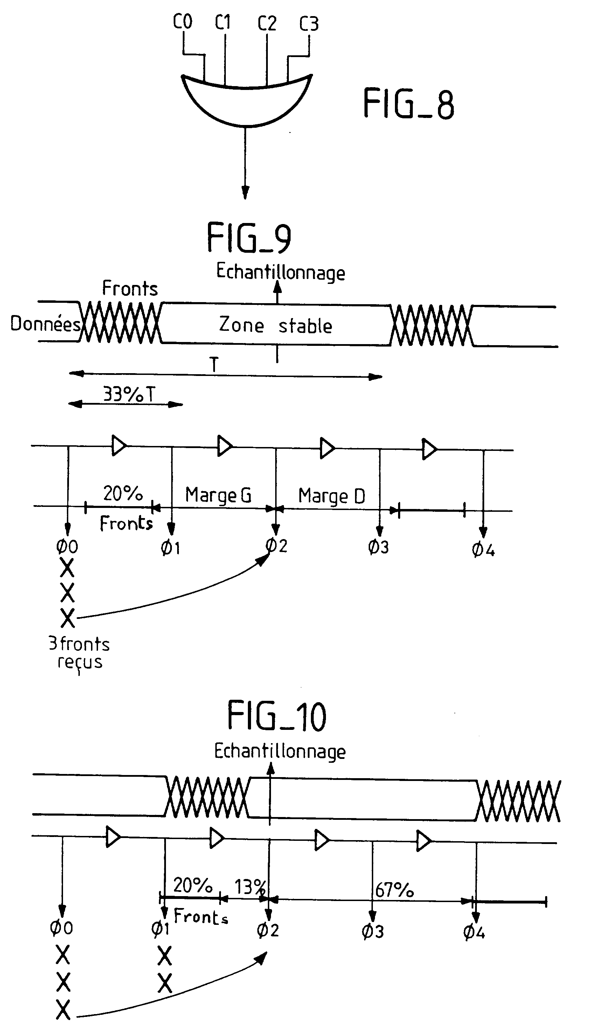

Le circuit P peut être réalisé par exemple au moyen d'une porte OU à quatre entrées et une sortie, tel que représenté sur la figure 8.

En pratique, lorsque le front sélectionné correspond à une phase φᵢ, la phase qui est choisie pour l'échantillonnage des données sera la phase φᵢ₊₂. En effet, ce choix de phase d'échantillonnage se justifie de la façon suivante :
- Les données en entrée sont supposées émises avec une horloge de même fréquence que l'horloge HL mais de phase différente et susceptibles d'avoir subi quelques altérations telle qu'une dissymétrie entre la durée d'un bit à zéro et celle d'un bit à 1 ou encore une instabilité (jitter). Ces défauts déterminent une zone de front sur chaque période de bits, le passage d'un bit au suivant pouvant survenir n'importe où dans cette zone et une zone stable comme on peut le voir sur la figure 9. Dans le cas représenté sur cette figure 9 le signal n'est pas trop perturbé et la zone de front ne représente que 20% de la période T.

Pour effectuer l'échantillonnage, il faut que cet échantillonnage ait lieu dans la zone stable et de préférence au centre de cette zone afin de simplifier tout calcul du choix de la phase. Ainsi, on va choisir de procéder à un échantillonnage dans la zone stable en se ménageant une marge suffisante.

Dans le cas représenté sur la figure 9 qui est le cas le plus favorable la zone de front, qui représente 20% de la période T, est entièrement contenue dans un des retards de la ligne à retard qui représente 33% de la période T. Au troisième front correct du précurseur le bit correspondant de la phase φ0 passe à 1. La phase d'échantillonnage choisie peut donc être la phase φ2. On voit que dans ce cas extrêmement favorable, l'échantillonnage se fait à peu près au centre de la zone stable.

Dans le cas représenté sur la figure 10, qui est le cas le plus défavorable, la zone de front est à cheval sur deux éléments de la ligne à retard de façon telle qu'elle empiète seulement un petit peu sur le premier retard. Dans ces conditions, les fronts corrects se répartissent sur les phases φ0 et φ1. Si l'on suppose encore que, par malchance, la phase φ0 reçoive trois fronts valides avant φ1, la phase choisie dans ces conditions est la phase φ2. L'échantillonnage réalisé est moins bien centré, mais il reste encore une marge égale à 13% tout à fait acceptable. Dans les autres cas défavorables, l'échantillonnage est réalisé avec une marge qui n'est pas inférieure à cette marge que l'on s'est fixée pour obtenir un résultat satisfaisant.

On a représenté sur la figure 5 un exemple de réalisation du multiplexeur selon l'invention.

Le multiplexeur comporte, selon l'invention, un système de priorité câblé, une structure pipe-line et un système de mémorisation sur ses entrées, la mémorisation n'étant nécessaire que dans la mesure où le préambule et le délimiteur se recouvrent.

Le multiplexeur MUX est relié aux sorties du registre de front, C0, C1, C2, C3. La priorité câblée permet d'interdire, au travers du multiplexeur, la propagation simultanée de deux phases correspondantes. Dans l'exemple de réalisation qui est représenté sur cette figure 5, la priorité câblée permet de sélectionner uniquement la plus à droite des phases valides quel que soit leur nombre. Ce problème de propagation simultanée de deux phases se pose en effet, car il n'est pas toujours facile d'imposer à la ligne à retard un retard total exactement égal à la période de l'horloge. Et donc pour cela, on s'arrange pour que le retard total soit un peu supérieur à la période quitte à rallonger la ligne à retard pour avoir un nombre suffisant d'échantillons par période d'horloge. Il devient de ce fait possible que le même front soit stocké deux fois dans le système de détection de front, si ce front est situé tout au début de la période (en pratique dans les bascules 1 et 4). La priorité câblée permet donc de résoudre ce problème.

En outre, on a choisi d'utiliser une structure pipe-line afin d'augmenter la fréquence de travail du multiplexeur par réduction du nombre de couches logiques traversées entre deux tops d'horloge. La structure pipe-line est formée des bascules de type D B1, B2, B3 et des multiplexeurs MUX1, MUX2, MUX3 sur la figure.

Le multiplexeur représenté sur cette figure comporte également, comme on l'a déjà dit, un système de mémorisation comprenant des registres. Le nombre de registres de mémorisation est fonction du nombre de bits communs entre le préambule et le délimiteur.

Dans le cas ou l'on choisit d'avoir un délimiteur et un préambule qui se recouvrent, il devient nécessaire de ne pas perdre, lors du phasage, les bits communs aux deux fonctions. Le phaseur proposé ici permet le passage de l'information à partir du moment où le phasage est correct, les bits ayant permis d'effectuer le phasage étant effacés.

Pour récupérer ces bits, on a donc, selon l'invention, intercalé une mémoire de profondeur suffisante entre le registre d'échantillonnage et les entrées du multiplexeur proprement dit. Les quatre phases possibles pour chacun des bits commun au préambule et au délimiteur sont mémorisées en attendant que le traitement du préambule permette de choisir la bonne phase. La profondeur de la mémoire nécessaire est donc égale au nombre de bits communs.

Cette mémoire est réalisée, selon cet exemple de réalisation, par les trois registres à bascule RD1, RD2, RD3.

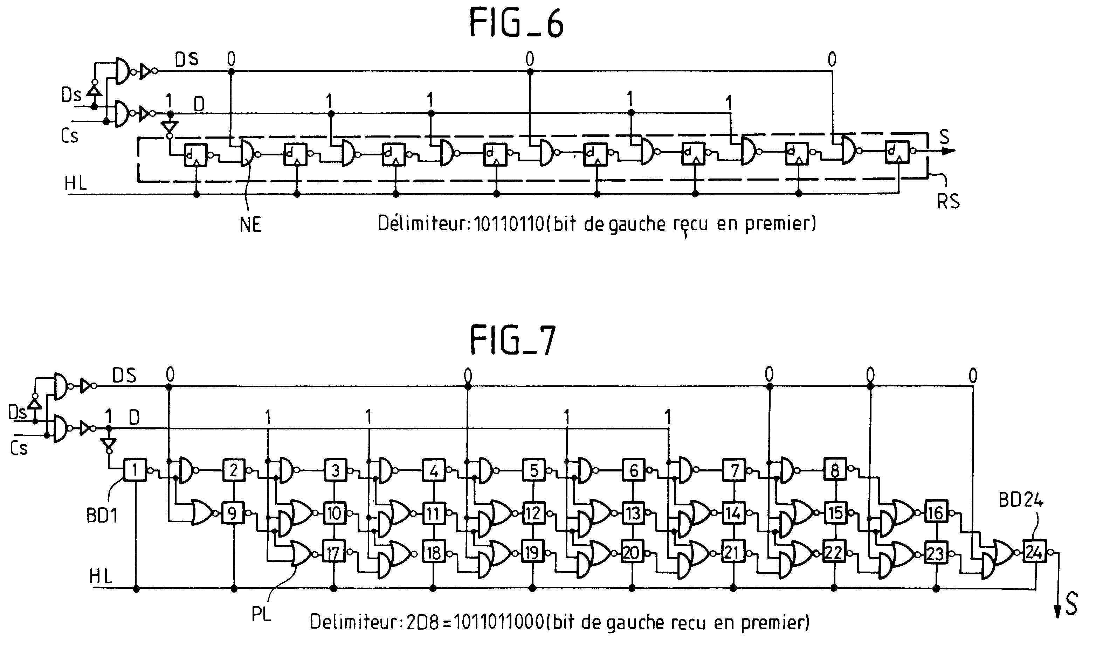

On va se reporter maintenant aux schémas des figures 6 et 7. Sur la figure 6 on a représenté un circuit de synchronisation SYC permettant de détecter le mot de resynchronisation dénommé classiquement délimiteur dans le train binaire reçu. Ce circuit reçoit sur son entrée la donnée série rephasée Ds. Il reçoit également un créneau de synchronisation Cs pouvant être généré en interne dès que le phasage a été effectué, c'est-à-dire dès qu'il y a présence d'un 1 dans le registre de front et sa durée peut être fixée par une temporisation Ts de manière à ce que, par exemple, le créneau retombe avant la fin de la cellule.

Le circuit représenté sur la figure 6 correspond à une réalisation préférentielle de type série. Il comporte pour cela une série de bascules de type D reliées entre elles par des portes logiques "NON/ET" référencées NE. Le nombre de bascules dépend du nombre de bits du délimiteur choisi. Dans l'exemple d'un délimiteur égal à B6 en hexadécimal (10110110) lorsque l'entrée Ds reçoit un 1 (premier bit du délimiteur) la première bascule du registre est chargée à 1. Si le bit suivant vaut 0 (deuxième bit du délimiteur) alors la bascule suivante passe aussi à 1, sinon elle reste à 0. Cette séquence se propage jusqu'à ce que la dernière bascule soit atteinte, ce qui ne peut arriver que si l'on a reçu intégralement le délimiteur sur l'entrée Ds. Tel quel, ce circuit ne corrige pas les erreurs de transmission. Un délimiteur abîmé ne sera pas reconnu.

Selon un mode préféré de réalisation, on utilise un circuit de synchronisation série permettant de corriger des erreurs. Un exemple de réalisation d'un tel circuit est donné sur le schéma de la figure 7. Cet exemple particulier de réalisation permet une correction de deux erreurs dans le délimiteur.

Le circuit de synchronisation comporte trois étages de registre à bascule de type série. Selon l'invention on rajoute un étage de registre à bascule série par erreur à corriger. Ce circuit permet donc, par rapport au circuit représenté sur la figure 6, de corriger deux erreurs apparaissant dans le délimiteur. Le circuit représenté sur cette figure 7 comporte 24 bascules référencées de BD1 à BD24 et un circuit logique d'attaque des entrées des bascules, formé de portes logiques PL tel que représenté sur cette figure. Cette réalisation permet de reconnaître un délimiteur égal à 2D8 en hexadécimal soit la séquence 10 1101 1000.

On va maintenant expliquer le fonctionnement de ce circuit. On suppose que l'on a reçu la suite 101 (les trois premiers bits du délimiteur). Les bascules BD1, BD2, BD3, BD9, BD10 et BD17 sont alors à 1. Si le bit suivant vaut 0, c'est-à-dire s'il y a une erreur sur le délimiteur, la bascule BD4 reste à 0 rompant ainsi la chaîne de reconnaissance du premier registre. Mais les bascule BD11 et BD18 passent tout de même à 1, les chaînes associées restent validées.

On suppose maintenant que l'on reçoit les bits corrects 011. Les bascules BD12, BD13, BD14 ainsi que les bascules BD19, BD20 et BD21 passent successivement à 1. L'arrivée d'une deuxième erreur (bit suivant = 1) invalide le deuxième registre, la bascule BD15 reste à 0 et seul le troisième registre reste validé. La bascule BD22 est à 1. Il faut une troisième erreur pour rompre définitivement le processus. L'arrivée d'un 1 dans la bascule BD24 signifie que l'on a reconnu un délimiteur contenant au plus deux erreurs.

Selon l'invention, on rajoutera un autre registre pour corriger une erreur supplémentaire et ainsi de suite. Un tel circuit présente en outre un fonctionnement très rapide puisqu'il y a peu de couches logiques entre deux tops d'horloge et que les portes logiques nécessaires présentent peu d'entrées.

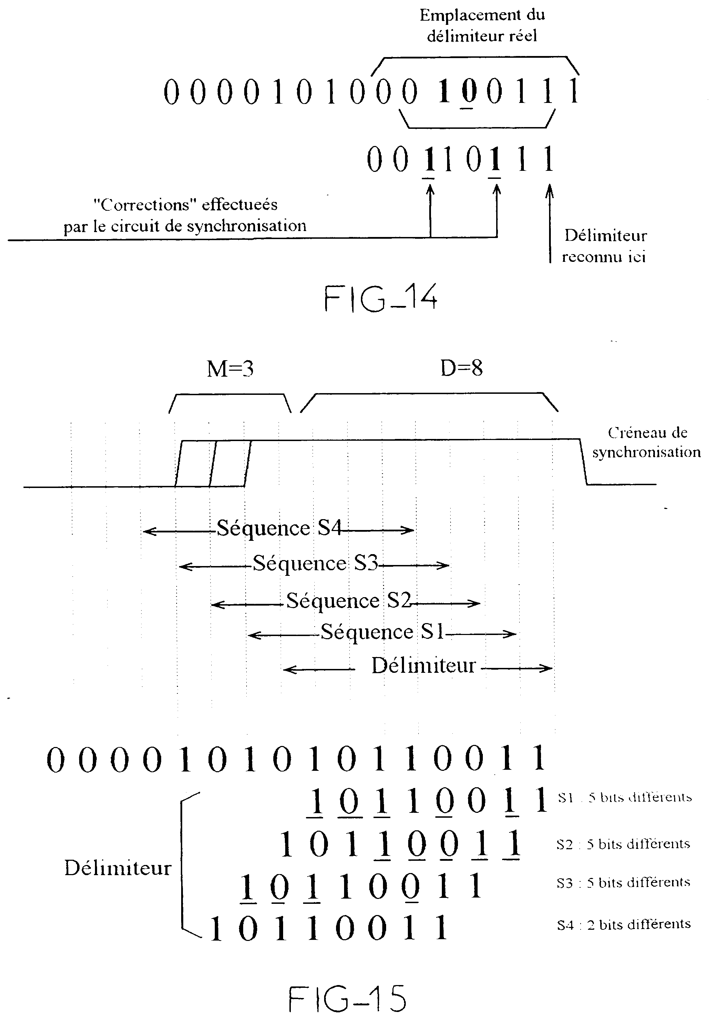

Selon l'invention, on choisit un créneau de synchronisations Cs de sorte que le circuit SYC soit actif pendant un laps de temps durant lequel le délimiteur est susceptible de se présenter. Si ce signal est très précis, c'est-à-dire s'il encadre exactement le délimiteur, il n'y a pas de problème et n'importe quel délimiteur convient. Mais dans les cas réels ce signal précède les délimiteurs d'un certain nombre de bits inconnus et variables. Il est en effet assez délicat de le générer avec précision du moins pour des fréquences de transmission élevées (150 à 622 MHz voire plus). Il existe alors un risque de reconnaissance anticipée et erronée du délimiteur d'autant plus important que le créneau de synchronisation est plus large et que la correction d'erreur est plus puissante. L'exemple donné ci-dessous va permettre de mieux comprendre ce phénomène:
- Prenons le cas d'un précurseur composé d'un préambule égal par exemple à la séquence 10101010 et d'un délimiteur égal à la séquence 0110111 sans recouvrement et d'un circuit de synchronisation apte à résister à deux erreurs. Si une erreur affecte le bit 4 du délimiteur, le précurseur reçu à l'entrée du circuit vaut alors 10101010001**0**0111. En supposant que le phasage s'effectue en 5 fronts, (ce qui est le pire des cas en l'absence d'erreur), le circuit de synchronisation recevra 00001110001**0**0111. Or, cette suite de bits contient une configuration prise à tort pour le délimiteur, un top avant la fin du délimiteur réel, tel qu'on peut le voir sur la figure 14.

Le système fonctionne en présence d'erreur lorsque le créneau de synchronisation encadre exactement le délimiteur ce qui est une condition qui peut être relativement difficile à obtenir. Pour remédier à cet inconvénient, on peut imposer la condition 1 suivante dans le choix du délimiteur : si D est la longueur du délimiteur, et si le créneau Cs démarre Mbits avant début effectif du délimiteur chaque séquence Si de D bits obtenus en prenant pour point de départ chacun des M bits précédents le délimiteur doit différer du délimiteur par au moins 2N+1 bits, N étant le nombre d'erreurs auquel on veut résister. Par exemple en prenant un délimiteur égal à B3 en hexadécimal (10110011) on obtient les cas de figure représentés sur la figure 15.

Les séquences S1, S2 et S3 satisfont à la condition précédente mais pas la séquence S4. En conséquence, le créneau de synchronisation pourra débuter sans problèmes n'importe quand entre le début de S3, et celui du délimiteur mais pas avant le début de S3. La position de la fin du créneau de synchronisation est beaucoup moins critique si on décide de considérer comme correcte la première synchronisation obtenue et de ne plus tenir compte des suivantes. Il suffit alors que le créneau retombe avant la fin de la cellule.

On préférera parfois augmenter encore la marge concernant le début du créneau. Pour cela il est avantageux de recourir à des précurseurs dans lesquels le préambule et le délimiteur se recouvrent au moins partiellement.

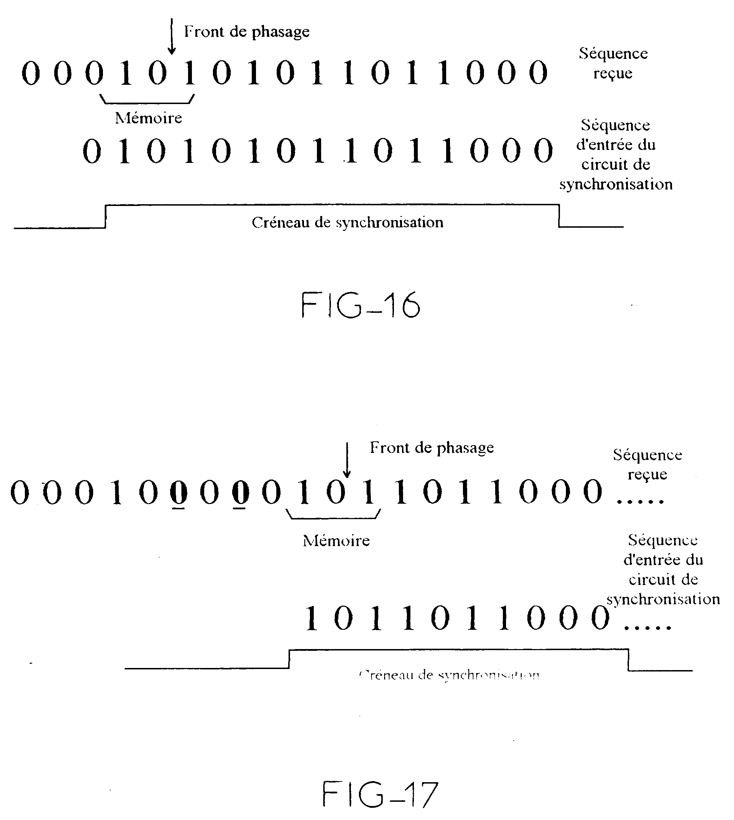

Selon un exemple préféré de réalisation, on va utiliser un créneau généré en interne qui débute dès que le phasage est effectué (dès la présence d'un 1 dans le registre de front) et dont la durée est fixée par une temporisation d'une valeur suffisante et non critique. (Il suffit pour cela que le créneau retombe avant la fin de la cellule). Dans le cas où le système de synchronisation est apte à corriger deux erreurs (N = 2), on pourra utiliser un précurseur égal à AAD8 en hexadécimal soit 1010101011011000 dont les neuf premiers bits composent le préambule et les dix derniers le délimiteur. Le délimiteur et le préambule possèdent trois bits en commun, la mémoire du multiplexeur à donc une profondeur égale à 3. Dans le meilleur des cas le phasage peut s'effectuer dès le troisième front tel qu'indiqué sur la figure 16.

En cas d'erreur double dans le préambule, il est possible que le phasage ne soit réalisé qu'après le neuvième front tel qu'indiqué sur la figure 17.

On choisira de préférence les précurseurs remplissant la condition énoncée précédemment. En effet, si le délimiteur possède D bits et que le système doive résister à N erreurs, chaque séquence Si de D bits obtenue en prenant pour point de départ le début de la séquence de meilleur cas puis chacun des bits suivants jusqu'à celui qui précède le délimiteur, doit différer du délimiteur par au moins 2N+1 bits. A titre d'exemple, quelques précurseurs répondant à cette condition vont être donnés dans la suite :
EXEMPLE DE PRECURSEURS RESISTANT A UNE ERREUR
   - 101001 (Hexa 29) =: Taille minimale (6 bits). Le délimiteur et le préambule ont tous deux 6 bits : ils se recouvrent entièrement, et la profondeur mémoire est égale à 6 bits.
   - 110101 (Hexa 35) =: Propriétés identiques au précédent.
   - 10101100 (Hexa AC) =: Taille 1 octet. Le préambule couvre les 5 premiers bits, le délimiteur les 5 derniers: la profondeur mémoire vaut 2.
   - 1010101100 (Hexa 2AC) =: Taille 10 bits. C'est le plus petit précurseur possédant un délimiteur (5 premiers bits) et un préambule (5 derniers bits) sans recouvrement. Aucune mémoire n'est donc nécessaire.
EXEMPLES DE PRECURSEURS RESISTANT A DEUX ERREURS:
   - 10101001001 (Hexa 549) =: Taille minimale (11 bits). Le délimiteur et le préambule ont tous deux 11 bits : ils se recouvrent entièrement, et la profondeur mémoire vaut 11.
   - 11010010101 (Hexa 695) =: Propriétés identiques au précédent.
   - 11010101001 (Hexa 6A9) =: Propriétés identiques au précédent.
   - 11011010101 (Hexa 6D5) =: Propriétés identiques au précédent.
   - 1010101011011000 (Hexa AAD8) =: Taille 2 octets.
   Le préambule couvre les 9 premiers bits, le délimiteur les 10 derniers : la profondeur mémoire vaut 3.
   - 101010101001110100 (Hexa 2AA74) =: Taille 18 bits.
   C'est le plus petits précurseur possédant un délimiteur (9 premiers bits) et un préambule (9 derniers bits) sans recouvrement.
EXEMPLES DE PRECURSEURS RESISTANT A TROIS ERREURS :
   - 1001010101001101 (Hexa 654D) =: Taille minimale (2 octets). Le délimiteur et le préambule ont tous deux 16 bits: ils se recouvrent entièrement, et la profondeur mémoire vaut 16.
   - 101010101010100001101110100 (Hexa 5554374) =: Taille 27 bits. C'est le plus petit précurseur possédant un délimiteur (13 premiers bits) et un préambule (14 derniers) sans recouvrement.

Dans le cas ou l'on choisit des précurseurs répondant à la condition 1, il n'est pas absolument nécessaire de fournir au circuit un créneau de synchronisation. Cependant il faut lui envoyer un signal de début de cellule. En effet, la seule reconnaissance du délimiteur ne peut suffire pour garantir la synchronisation car le risque d'une imitation de ce dernier (à N bits près), par une séquence de données internes à celles de la cellule est trop élevée.

Ce signal de début de cellule, émis entre deux cellules successives, indique au circuit qu'il doit se mettre en recherche de phase. Dès qu'il y a rephasage, le rephasage déclenche la recherche du délimiteur. Dans la mesure ou le nombre d'erreurs présentes dans le précurseur ne dépasse pas les capacités de résistance de l'ensemble du circuit, le phasage et la synchronisation sont corrects. Pour détecter le cas où la synchronisation ne se fait pas dans de bonnes conditions, on génère un signal de temporisation TS après la réussite du phasage. Ainsi on considère que si la synchronisation ne se fait pas dans les délais de cette temporisation, il y a échec. Cet échec pourra être signalé par l'émission d'un signal Si vers l'extérieur du circuit.

Dans le cas où le circuit est prévu pour résister à N erreurs et dans le cas où le délimiteur comprend D bits, la valeur de TS est fixée à une valeur égale à K+D où K est le nombre de bits séparant le (N+1)ième front du dernier bit du préambule.

K a été choisi de cette façon car on rappelle que le début du créneau de rephasage peut se déplacer dans un intervalle entre le (N+1)ième front du préambule et le (4N+1)ième front en fonction de la présence d'erreur et de gigue.

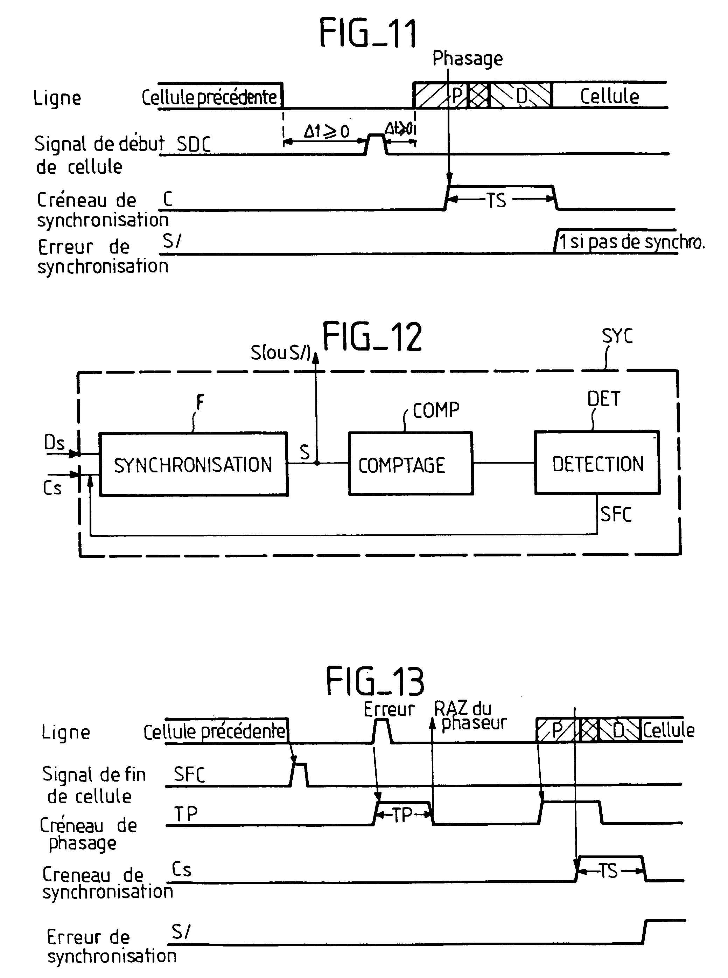

On pourra se reporter pour mieux comprendre au diagramme de fonctionnement représenté sur la figure 11 sur lequel le signal de début de cellule SDC est fourni de l'extérieur et sur lequel le créneau de synchronisation Cs se réduit à une temporisation TS telle que le montre la figure. Le circuit de synchronisation fournit un signal d'erreur de synchronisation S/ dans le cas où la synchronisation a échoué.

Une autre variante de fonctionnement de l'ensemble du circuit est possible. Cette variante est illustrée à la figure 12. En effet, il est possible de remplacer le top de début de cellule par un top de fin de cellule précédente. Ce signal SFC peut être généré par le circuit lui-même de façon autonome. Pour cela il suffit de rajouter un circuit de comptage COMP du nombre de bits reçus à partir de la synchronisation au circuit de synchronisation F (ce circuit sera par exemple le circuit de synchronisation, représenté sur la figure 7). Ce sont les bits de la cellule dont le nombre est connu. On rajoute également un détecteur DET de fin de réception de la cellule. Ce détecteur émet le top de fin de cellule SFC qui lance le début de la recherche de phase pour la cellule suivante. Ce signal est alors appliqué à l'entrée du créneau de synchronisation Cs. On pourra se reporter au schéma représenté sur la figure 12 ainsi qu'au diagramme de fonctionnement représenté sur la figure 13 pour mieux comprendre.

Pour éviter que, lorsque les cellules sont trop espacées, des erreur éventuelles (des tops positifs parasites) entre deux cellules ne déclenchent le système de phasage, on insère une nouvelle temporisation TP pour permettre la remise à zéro des bascules du phaseur lorsque le phasage n'a pas été obtenu entre le premier front reçu et la fin de la temporisation TP. Pour améliorer encore les résultats, il est possible de réinitialiser aussi le phaseur lorsque la temporisation de synchronisation TS est dépassée.

## Revendications

1. Procédé de récupération d'horloge et de synchronisation de données transmises par mode de transmission temporelle asynchrone, se trouvant sous la forme de cellules d'information précédées d'un train binaire précurseur, consistant pour assurer ces fonctions même en présence d'erreurs de transmission, à :
- effectuer la réception à partir d'une horloge locale HL, de période T, dont la fréquence est sensiblement égale à la fréquence d'émission
- introduire des retards d'une durée T/k sur le train binaire reçu pour obtenir plusieurs signaux de phase; caractérisé en ce qu'il consiste en outre à :
- attendre la présence, sur un même signal de phase, de plusieurs fronts cohérents avec une impulsion d'horloge HL,
- choisir comme signal de rephasage des données, le signal de phase satisfaisant à la condition précédente et qui encadre l'impulsion d'horloge,
- rephaser les données avec ce signal de phase,
- reconnaître dans le train binaire précurseur un mot de resynchronisation pour synchroniser la réception des données.

2. Procédé de récupération d'horloge et de synchronisation de données selon la revendication 1, caractérisé en ce que la resynchronisation se fait avec corrections d'erreurs de transmission sur le train binaire précurseur et génération d'un créneau de synchronisation pendant une période durant laquelle le mot de synchronisation dénommé délimiteur est susceptible d'apparaître.

3. Procédé de récupération d'horloge et de synchronisation selon la revendication 2, caractérisé en ce que pour éviter une reconnaissance anticipée et erronée du délimiteur de longueur D, le créneau de synchronisation Cs n'est émis que si chaque séquence Si de D bits analysée, en prenant pour point de départ chacun des bits compris entre la montée du créneau Cs et le début effectif du délimiteur, diffère du délimiteur par au moins 2N+1 bits, N étant le nombre d'erreurs de transmission pouvant être corrigées.

4. Procédé de récupération d'horloge et de synchronisation selon l'une quelconque des revendications 1 à 3, caractérisé en ce que le train binaire précurseur comporte un préambule et un délimiteur qui se recouvrent partiellement.

5. Procédé de récupération d'horloge et de synchronisation selon l'une quelconque des revendications 1 à 3, caractérisé en ce que le délimiteur et le préambule se recouvrent entièrement.

6. Dispositif de récupération d'horloge et de synchronisation de données transmises en mode de transmission temporelle asynchrone se trouvant sous la forme de cellules d'information précédées d'un train binaire précurseur caractérisé en ce qu'il comporte :
a) un circuit de rephasage (RP) apte à rephaser les données même en présence d'erreurs de transmission, ce circuit comprenant :
- une ligne à retard (LR) pour introduire des retards de phase sur chaque impulsion du train de données, d'une durée T/k, où T est la période de l'horloge locale HL;
- des moyens (DC/RF) de détection des fronts cohérents avec les impulsions d'horloge et de correction d'erreurs apparaissant sur le préambule du train de données précurseur;
b) un circuit de resynchronisation (SYC) destiné à reconnaître dans le train précurseur, le délimiteur en présence d'erreurs de transmission dans ce délimiteur, ce circuit comportant pour cela des moyens correcteurs d'erreurs sur le délimiteur.

7. Dispositif de récupération d'horloge et de synchronisation selon la revendication 6, caractérisé en ce que les moyens de détection correcteurs d'erreurs du circuit de rephasage comportent autant d'étages de registres à bascules (R1, R2) que d'erreurs à corriger, ces registres étant reliés entre eux par des portes logiques (ET) de manière à ne stocker la détection d'un front que si un front correspondant à la même phase a déjà été stocké dans le registre de l'étage précédent.

8. Dispositif de récupération d'horloge et de synchronisation selon la revendication 7, caractérisé en ce que le circuit de rephasage (RP) comporte en outre un registre de front (RF) qui ne stocke un front que si ce front a déjà été stocké dans les étapes précédentes sur la même phase, le premier front arrivant dans le registre de front déterminant le phasage définitif et arrêtant le processus de recherche de phase.

9. Dispositif de récupération d'horloge et de synchronisation selon la revendication 8, caractérisé en ce qu'il comporte en outre des moyens (P) commandant l'arrêt du processus de recherche de phase et de sélection du signal de phase permettant de rephaser les données.

10. Dispositif de récupération d'horloge et de synchronisation selon la revendication 9, caractérisé en ce que les moyens de sélection du signal de phase comportent un multiplexeur (MUX) avec priorité câblée interdisant la propagation simultanée de deux phases et sélectionnant la plus à droite ou la plus à gauche des phases valides.

11. Dispositif de récupération d'horloge et de synchronisation selon la revendication 10, caractérisé en ce que le multiplexeur (MUX) a une structure pipe-line comportant des bascules D pour augmenter sa fréquence de travail.

12. Dispositif de récupération d'horloge et de synchronisation selon la revendication 10, caractérisé en ce que le multiplexeur (MUX) comporte en entrée, dans le cas où le préambule et le délimiteur se recouvrent, des moyens de mémorisation (RD1, RD2, RD3) pour mémoriser les bits communs au préambule et au délimiteur en attendant que le signal de rephasage convenant soit sélectionné.

13. Dispositif de récupération d'horloge et de synchronisation selon la revendication 12, caractérisé en ce que les moyens de mémorisation comportent des registres à bascule de type D (RD1, RD2, RD3).

14. Dispositif de récupération d'horloge et de synchronisation selon l'une quelconque des revendications 6 à 13, caractérisé en ce que le circuit de resynchronisation (SYC) comporte un registre de reconnaissance série (RS) de longueur égale à celle du délimiteur auquel sont reliés, au moyen de portes logiques (NE, PL), N autres registres décalés d'un bit, N étant le nombre d'erreurs que l'on désire corriger dans le délimiteur.

15. Dispositif de récupération d'horloge et de synchronisation selon la revendication 14, caractérisé en ce que le circuit de resynchronisation (SYC) comporte en outre des moyens de comptage (COMP) et de détection (DET) permettant de générer un signal de fin de cellule SFC pour assurer la fonction créneau de synchronisation.

## Patentansprüche

1. Verfahren zur Taktrückgewinnung und Synchronisierung von Daten, übertragen durch ein zeitlich bzw. zeitweise asynchrones Übertragungsverfahren in Form von Informationszellen, denen ein Vorläufer-Binärzug vorangeht, darin bestehend - um diese Funktionen selbst beim Auftreten von Übertragungsfehlern sicherzustellen -:
- den Empfang durchzuführen mittels eines lokalen Takts HL der Periode T, dessen Frequenz im wesentlichen gleich der Sendefrequenz ist,
- Verzögerungen einer Dauer T/k an dem emfangenen Binärzug einzuführen, um mehrere Phasensignale zu erhalten;
**dadurch gekennzeichnet,**
daß es außerdem darin besteht:
- an ein und demselben Phasensignal die Präsenz bzw. das Auftreten von mehreren mit einem Taktimpuls HL kohärenten Flanken abzuwarten,
- als Phasenwiederherstellungssignal der Daten (signal de rephasage des données) das Phasensignal auszuwählen, das die vorangehende Bedingung erfüllt und das den Taktimpuls umrahmt,
- die Daten mit diesem Phasensignal wieder in Phase zu bringen,
- in dem Vorläufer-Binärzug ein Resynchronisierungswort zu erkennen, um den Empfang der Daten zu synchronisieren.

2. Verfahren zur Taktrückgewinnung und Synchronisierung nach Anspruch 1, dadurch gekennzeichnet, daß die Resynchronisierung erfolgt mit Übertragungsfehlerkorrekturen an dem Vorläufer-Binärzug und Erzeugung eines Synchronisierungsimpulses während einer Periode, in der das Delimiter genannte Synchronisierungswort möglicherweise erscheint bzw. imstande ist zu erscheinen.

3. Verfahren zur Taktrückgewinnung und Synchronisierung nach Anspruch 2, dadurch gekennzeichnet, daß, um ein vorzeitiges und irrtümliches Erkennen des Delimiters der Länge D zu vermeiden, der Synchronisierungsimpuls Cs nur gesendet wird, wenn jede analysierte Sequenz Si aus D Bits - wobei man jedes der Bits zwischen dem Anstieg des Impulses Cs und dem effektiven Beginn des Delimiters als Anfangspunkt nimmt - sich vom Delimiter durch wenigstens 2N+1 Bits unterscheidet, wobei N die Anzahl der Übertragungsfehler ist, die korrigiert werden können.

4. Verfahren zur Taktrückgewinnung und Synchronisierung nach einem der Ansprüche 1 bis 3, dadurch gekennzeichnet, daß der Vorläufer-Binärzug eine Präambel und einen Delimiter umfaßt, die sich partiell überdecken.

5. Verfahren zur Taktrückgewinnung und Synchronisierung nach einem der Ansprüche 1 bis 3, dadurch gekennzeichnet, daß der Delimiter und die Präambel sich ganz überdecken.

6. Vorrichtung zur Taktrückgewinnung und Synchronisierung von Daten, übertragen durch ein zeitlich bzw. zeitweise asynchrones Übertragungsverfahren in Form von Informationszellen, denen ein Vorläufer-Binärzug vorangeht,
**dadurch gekennzeichnet,** daß sie enthält:
a) eine Phasenwiederherstellungsschaltung (RP), geeignet die Daten wieder in Phase zu bringen, auch in Präsenz bzw. bei Vorhandensein eines übertragungsfehlers, wobei diese Schaltung umfaßt:
- eine Verzögerungsleitung (LR), um an jedem Impuls des Datenzugs Phasenverzögerungen einer Dauer T/k einzuführen, wobei T die Periode des lokalen Takts HL ist;
- Einrichtungen zur Detektion (DC/RF) der mit den Taktimpulsen kohärenten Flanken und zur Korrektur von Fehlern, die in der Präambel des Vorläufer-Datenzugs erscheinen;
b) eine Resynchronisierungsschaltung (SYC), um in dem Vorläufer-Datenzug den Delimiter bei Vorhandensein von übertragungsfehlern in diesem Delimiter zu erkennen, wobei diese Schaltung dazu Einrichtungen zur Korrektur von Fehlern in dem Delimiter umfaßt.

7. Vorrichtung zur Taktrückgewinnung und Synchronisierung nach Anspruch 6, dadurch gekennzeichnet, daß die Detektions-Fehlerkorrektur-Einrichtungen der Phasenwiederherstellungsschaltung ebensoviele Flip-Flop-Registerstufen (R1, R2) wie zu korrigierende Fehler umfassen, wobei diese Register miteinander verbunden sind durch logische Glieder (UND), um die Detektion einer Flanke nur zu speichern, wenn eine entsprechende Flanke mit derselben Phase schon in dem Register der vorangehenden Stufe abgespeichert wurde.

8. Vorrichtung zur Taktrückgewinnung und Synchronisierung nach Anspruch 7, dadurch gekennzeichnet, daß die Phasenwiederherstellungsschaltung (RP) außerdem ein Flankenregister (RF) umfaßt, das eine Flanke nur speichert, wenn diese Flanke schon gespeichert wurde in den vorangehenden Schritten an derselben Phase, wobei die erste in dem Flankenregister eintreffende Flanke die definitive Phasengleichheit (phasage definitif) bestimmt und den Phasensuchprozeß anhält.

9. Vorrichtung zur Taktrückgewinnung und Synchronisierung nach Anspruch 8, dadurch gekennzeichnet, daß sie außerdem Einrichtungen (P) umfaßt, die das Anhalten des Phasensuchprozesses und der Selektion des Phasensignals steuert, das ermöglicht, die Daten wieder in Phase zu bringen.

10. Vorrichtung zur Taktrückgewinnung und Synchronisierung nach Anspruch 9, dadurch gekennzeichnet, daß die Selektionseinrichtungen des Phasensignals einen Multiplexer mit verkabelter Priorität umfassen, der die simultane Übertragung von zwei Phasen ausschließt und der unter den gültigen Phasen die am weitesten rechts oder die am weitesten links befindliche auswählt.

11. Vorrichtung zur Taktrückgewinnung und Synchronisierung nach Anspruch 10, dadurch gekennzeichnet, daß der Multiplexer (MUX) eine Pipelining-Struktur hat, Kippstufen bzw. Trigger D umfassend, um seine Arbeitsfrequenz zu erhöhen.

12. Vorrichtung zur Taktrückgewinnung und Synchronisierung nach Anspruch 10, dadurch gekennzeichnet, daß der Multiplexer (MUX) für den Fall, daß die Präambel und der Delimiter sich überdecken, am Eingang Speichereinrichtungen (RD1, RD2, RD3) umfaßt, um die gemeinsamen Bits der Präambel und des Delimiters zu speichern, bis das passende Phasenwiederherstellungssignal ausgewählt ist.

13. Vorrichtung zur Taktrückgewinnung und Synchronisierung nach Anspruch 12, dadurch gekennzeichnet, daß die Speichereinrichtungen Flip-Flop-Register des Typs D (RD1, RD2, RD3) umfassen.

14. Vorrichtung zur Taktrückgewinnung und Synchronisierung nach einem der Ansprüche 6 bis 13, dadurch gekennzeichnet, daß die Resynchronisierungsschaltung (SYC) ein Erkennungsreihenregister (RS) einer Länge gleich der des Delimiters umfaßt, mit dem durch logische Glieder (NE bzw. NAND, PL) N weitere um ein Bit verschobene Register verbunden sind, wobei N die Anzahl der Fehler ist, die man in dem Delimiter zu korrigieren wünscht.

15. Vorrichtung zur Taktrückgewinnung und Synchronisierung nach Anspruch 14, dadurch gekennzeichnet, daß die Resynchronisierungsschaltung (SYC) Einrichtungen zum Zählen (COMP) und zur Detektion (DET) umfaßt, die ermöglichen, ein Zellenende-Signal SCF zu erzeugen, um die Synchronisierungsimpulsfunktion zu gewährleisten.

## Claims

1. Method for clock retrieval and synchronisation of data transmitted in asynchronous time transmission mode, taking the form of information cells preceded by a binary precursor sequence, consisting, in order to provide these functions even in the presence of transmission errors, of:
- effecting reception from a local clock HL, with a period T, whose frequency is substantially equal to the transmission frequency
- introducing delays with a duration T/k on the binary sequence received in order to obtain several phase signals; characterised in that it also consists of:
- awaiting the presence, on any one phase signal, of several edges consistent with a clock pulse HL,
- choosing as the data rephasing signal the phase signal satisfying the above condition and framing the clock pulse,
- rephasing the data with this phase signal,
- recognizing in the binary precursor sequence a resynchronisation word for synchronising the reception of the data.

2. Method of clock retrieval and data synchronisation according to Claim 1, characterised in that the resynchronisation takes place with transmission error correction on the binary precursor sequence and the generation of a synchronisation square wave during a period in which the synchronisation word referred to as the delimiter may appear.

3. Method of clock retrieval and data synchronisation according to Claim 2, characterised in that, in order to avoid premature and erroneous recognition of the delimiter with a length D, the synchronisation square wave Cs is transmitted only if each analyzed sequence Si of D bits, taking as the starting point each of the bits between the rise of the square wave Cs and the actual start of the delimiter, differs from the delimiter by at least 2N+1 bits, N being the number of transmission errors able to be corrected.

4. Method of clock retrieval and synchronisation according to any one of Claims 1 to 3, characterised in that the binary precursor sequence includes a preamble and a delimiter which overlap partially.

5. Method of clock retrieval and synchronisation according to any one of Claims 1 to 3, characterised in that the delimiter and preamble overlap fully.

6. Device for clock retrieval and synchronisation of data transmitted in asynchronous time transmission mode, taking the form of information cells preceded by a binary precursor sequence, characterised in that it includes:
a) a rephasing circuit (RP) suitable for rephasing the data, even in the presence of transmission errors, this circuit comprising:
- a delay line (LR) for introducing phase delays on each pulse in the data sequence, with a duration T/k, where T is the period of the local clock HL;
- means (DC/RF) for detecting edges consistent with the clock pulses and for correcting errors appearing on the preamble of the precursor data sequence;
b) a resynchronisation circuit (SYC) designed to recognize the delimiter in the precursor sequence in the presence of transmission errors in this delimiter, this circuit including, to this end, means of correcting errors on the delimiter.

7. Device for clock retrieval and synchronisation according to Claim 6, characterised in that the rephasing circuit error correction detection means include as many flip-flop register stages (R1, R2) as there are errors to be corrected, these registers being interconnected by logic gates (ET) so as to store the detection of an edge only if an edge corresponding to the same phase has already been stored in the register of the preceding stage.

8. Device for clock retrieval and synchronisation according to Claim 7, characterised in that the rephasing circuit (RP) also includes an edge register (RF) which stores an edge only if this edge has already been stored in the preceding steps on the same phase, the first edge arriving in the edge register determining the definitive phasing and halting the process of phase seeking.

9. Device for clock retrieval and synchronisation according to Claim 8, characterised in that it also includes means (P) controlling the halting of the process of phase seeking and selection of the phase signal enabling the data to be rephased.

10. Device for clock retrieval and synchronisation according to Claim 9, characterised in that the means for selecting the phase signal include a multiplexer (MUX) with hard-wired priority preventing the simultaneous propagation of two phases and selecting the rightmost or leftmost of the valid phases.

11. Device for clock retrieval and synchronisation according to Claim 10, characterised in that the multiplexer (MUX) has a pipe-line structure including flip-flops D for increasing its operating frequency.

12. Device for clock retrieval and synchronisation according to Claim 10, characterised in that the multiplexer (MUX)- has at the input, in cases where the preamble and delimiter overlap, memory means (RD1, RD2, RD3) for storing the bits common to the preamble and delimiter, while waiting for the appropriate rephasing signal to be selected.

13. Device for clock retrieval and synchronisation according to Claim 12, characterised in that the memory means include type D flip-flop registers (RD1, RD2, RD3).

14. Device for clock retrieval and synchronisation according to any one of Claims 6 to 13, characterised in that the resynchronisation circuit (SYC) includes a serial recognition register (RS) whose length is equal to that of the delimiter to which N other registers offset by one bit are connected by means of logic gates (NE, PL), N being the number of errors to be corrected in the delimiter.

15. Device for clock retrieval and synchronisation according to Claim 14, characterised in that the resynchronisation circuit (SYC) also includes counting (COMP) and detection (DET) means enabling an end of cell signal SFC to be generated in order to provide the synchronisation square wave function.
